# EUROPEAN PATENT SPECIFICATION

(11) **EP 3 357 803 B1**
(45) Date of publication and mention of the grant of the patent: **24.11.2021**
(21) Application number: 16850947.9
(22) Date of filing: 18.08.2016
(51) Int. Cl.: B62J 17/00, B62J 3/12, B62J 6/027, B62K 11/10, B62J 23/00

(54) **SADDLED VEHICLE**
SATTELFAHRZEUG
VÉHICULE À SELLE

(30) Priority: 28.09.2015 JP 2015189846
(43) Date of publication of application: 08.08.2018
(73) Proprietor: Honda Motor Co., Ltd., Tokyo 107-8556 (JP)
(72) Inventor: KATAOKA Keiko, Wako-shi Saitama 351-0193 (JP)
(74) Representative: Weickmann & Weickmann PartmbB
(86) International application number: PCT/JP2016/074128
(87) International publication number: WO 2017/056771

(56) References cited:
- EP-A2- 2 327 615
- CN-U- 201 951 614
- JP-A- H10 167 146
- JP-A- 2004 345 635
- JP-A- 2006 143 176
- JP-A- 2007 283 927
- JP-A- 2010 006 259
- JP-A- 2013 193 658
- US-A1- 2007 240 924
- US-A1- 2013 320 697

## Description

### TECHNICAL FIELD

The present invention relates to a saddled vehicle.

### BACKGROUND ART

Conventionally, as disclosed in JP 2006-143176 A, as an example, there have been known a saddled vehicle including a front cowl (50) covering a head pipe (3) from the front; and a horn (15) at least a part of which is covered with the front cowl (52), when viewed from the front of the vehicle in which an opening (52) for the horn is formed in the front cowl (50).

JP 2013 193 658 A shows a saddled vehicle according to the preamble of claim 1.

EP 2 327 615 A2 shows a horn mounted to the head pipe by a first stay, and an ABS modulator mounted to the head pipe by a second stay below the horn.

US 2013/320697 A1 shows a stay mounting both an ABS unit and a single headlight unit to a head pipe. The horn is located behind the ABS unit, and is mounted to the front wall portion of the glove box, but not to the stay.

US 2007/240924 A1 shows saddled vehicle, in which an opening for the horn is formed with a gap provided at a combined portion where divided cowls are combined together,

### SUMMARY OF INVENTION

### TECHNICAL PROBLEM

Since in the above-mentioned conventional saddled vehicle of JP 2006-143176 A, the opening (52) for the horn is formed as a hole (52) by directly forming an opening (52) in the front cowl (52), a problem lies in that the opening (52) for the horn is conspicuous and is likely to have a great influence on visual appearance thereof. Also, since the opening (52) for the horn is directly formed in the front cowl (52) which is susceptible to wind pressure, a problem lies in that the rigidity around the opening (52) for the horn is likely to be reduced.

The technical problem to be solved by the present invention is to provide a saddled vehicle having an ABS modulator and capable of making the opening for the horn inconspicuous as well as of suppressing the reduction of the rigidity of the front cowl.

### SOLUTION TO PROBLEM

In order to solve the above technical problems, the invention provides a saddled vehicle according to claim 1.
The saddled vehicle according to the present invention includes a saddled vehicle provided with a front cowl covering a head pipe from the front and a horn at least part of which is covered with the front cowl when viewed from the front of the vehicle, in which an opening for the horn is formed in the front cowl, the front cowl is configured by combining upper and lower two divided cowls; and the opening for the horn is formed with a gap provided at a combined portion where the divided cowls are combined together.
With the saddled vehicle configured as above, since the opening for the horn is formed by making a gap at the combined portion of the divided cowls, the arrangement makes the opening for the horn inconspicuous by overlapping the opening for the horn with the divisional line of the front cowl. Further, since it eliminates the necessity to directly make a hole in the front cowl, thereby suppressing the reduction of the rigidity of the front cowl.

In the above saddled vehicle, it can be arranged such that the combined portion includes a joined part at which the divided cowls are jointed together that a non-joined part forming the opening for the horn; and that the non-joined part is formed at a midway part of the joined part.
With the arrangement thus configure as above, the divided cowls are jointed together such that they interpose the opening for the horn therebetween as a result that the opening for the horn is formed on the midway part of the joined part, thereby sufficiently securing the rigidity of the front cowl.

In the above saddled vehicle, it can be arranged such that at least a part of the opening for the horn is formed by a first opening forming part for the horn which is formed in the upper divided cowl and a second opening forming part for the horn which is formed in the lower divided cowl; and that a bend portion which bends backward is formed on at least one of the first opening forming part for the horn and the second opening forming part for the horn.
With the arrangement thus configured as above, the bend portion which bends backward can enhance the rigidity of the front cowl around the opening for the horn. Further, since this bend portion which bends backward or bends so as to come closer to the horn, the bend portion can act as a guide for an alarm sound, thereby improving the transmission efficiency of the forward alarm sound emitted from the horn.

In the above saddled vehicle, it can be arranged such that the combined portion includes a joined part at which the divided cowls are jointed together; that a non-joined part forming the opening for the horn; and that the bend portion is formed consecutively from the non-joined part to the joined part.
The arrangement thus configured as above allows the rigidity of the front cowl around the opening for the horn to be more enhanced, and the opening for the horn to be made more inconspicuous by consecutively forming the bend portion in the joined part, thereby enhancing the visual appearance of the vehicle.

In the above saddled vehicle, it can be arranged such that the vehicle is provided with a front fender covering an upper side of the front wheel; and that the opening for the horn is formed at a position nearer to the upper portion of the front cowl with respect to the vertical direction of the front cowl positioned above the upper end of the front fender when viewed from the side of the vehicle.

With the arrangement thus configured as above, since the opening for the horn is formed nearer to the upper portion of the front cowl, the arrangement more improves the transmission efficiency of the forward alarm sound emitted from the horn.

In the above saddled vehicle, it can be arranged such that the combined portion is formed so as to have a U-shaped divisional line or a V-shaped divisional line when viewed from the front of the vehicle; and that the opening for the horn is formed so as to include an apex of the U-shaped divisional line or the V-shaped divisional line.

With the arrangement thus configured as above, since a gap made at the combined portion forming the opening for the horn includes the apex of the U-shaped divisional line or the V-shaped divisional line when viewed from the front of the vehicle, the arrangement allows the opening for the horn to be made in a more inconspicuous manner. Further, since the opening for the horn is formed so as to include the apex of the U-shaped divisional line or the V-shaped divisional line, the arrangement also allows the rigidity of the front cowl around the opening for the horn to be enhanced.

In the above saddled vehicle, a lighting system is mounted on the right and left sides of the front cowl respectively; and the lighting systems are mounted on the right and left sides of the horn respectively.
With the arrangement thus configured as above, since the lighting systems enable a part of the alarm sound to be guided to the opening for the horn, the arrangement improves the transmission efficiency of the forward alarm sound emitted from the horn. Further, the arrangement allows compactization of the front side of the vehicle in the longitudinal direction.
Note that the lighting systems may be such systems as including at least one of a blinker, a position lamp and a headlight.

In the above saddled vehicle, the horn is arranged ahead of rear ends of the lighting systems.
The arrangement thus configured as above allows the transmission efficiency of the forward alarm sound emitted from the horn to be more effectively improved; and compactization of the front side of the vehicle in the longitudinal direction.

In the above saddled vehicle, it can be arranged such that the horn is arranged at a position where the horn overlaps with the lighting systems in the vertical direction of the vehicle when viewed from the front of the vehicle.

The arrangement thus configured as above, allows the transmission efficiency of the forward alarm sound emitted from the horn to be more effectively improved; and also compactization of the front side of the vehicle in the vertical direction.

### BRIEF DESCRIPTION OF DRAWINGS

[Fig. 1] Fig. 1 is a front side view of an embodiment of the saddled vehicle according to the present invention.
[Fig. 2] Fig. 2 is a left side view of the saddled vehicle.
[Fig. 3] Fig. 3 is a partially enlarged front side view of the saddled vehicle.
[Fig. 4] Fig. 4 is a partially omitted enlarged front side view (the divided cowls 30 and 40 are removed from Fig. 3) of the saddled vehicle.
[Fig. 5] Fig. 5 is a partially enlarged perspective view of the saddled vehicle.
[Fig. 6] Fig. 6 is a partially omitted cross-sectional view taken along line 6-6 of Fig. 3.
[Fig. 7] Fig. 7 is a partially enlarged view of Fig. 6.
[Fig. 8] Fig. 8 is a partially omitted cross-sectional view taken along line 8-8 of Fig. 3.
[Fig. 9] Fig. 9 is a partially omitted cross-sectional view taken along line 9-9 of Fig. 3.
[Fig. 10] Fig. 10 is a partially omitted cross-sectional view taken along line 10-10 of Fig. 2.

### DESCRIPTION OF EMBODIMENT

Hereafter, a description will be given of an embodiment of the saddled vehicle according to the present invention with reference to the accompanying drawings. Note that the drawings should be seen along the direction of the reference numerals. In the following description, front and rear sides, right and left sides, upper and lower sides are set along the directions seen from a driver; and the front side, the rear side, the left side, the right side, the upper side and the lower side of the vehicle are indicated as Fr, Rr, L, R, U and D respectively in the following description, if necessary. The same portions or corresponding portions are denoted by the same numerals throughout the respective drawings.

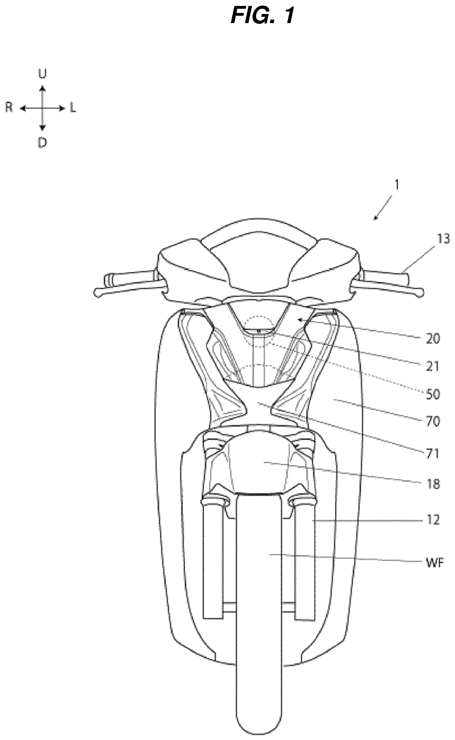

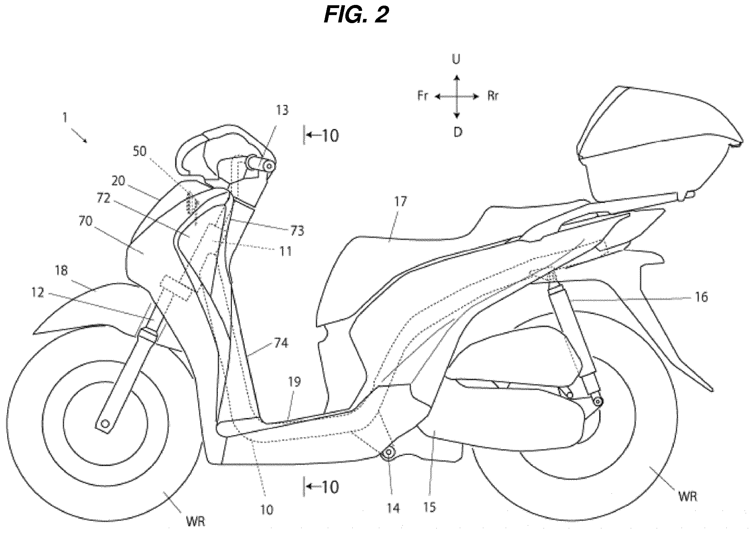

As shown in Figs. 1 and 2, the saddled vehicle 1 according to the present embodiment is provided with a front cowl 20 covering a head pipe 11 (see Fig. 2) from the front; and a horn 50 at least a part of which is covered with the front cowl 20 when viewed from the front of the vehicle, in which an opening 21 for the horn is formed in the front cowl 20.

As shown in Fig. 2, the head pipe 11 is provided on the front part of a vehicle body frame 10. A front fork 12 is attached in a steerable manner to the head pipe 11 and a front wheel WF is attached to the lower end of the front fork 12. The upper side of the front wheel WF is covered with a front fender 18. A steering handle 13 is attached to the upper side of the front fork 12. A power unit 15 is supported in a swingable manner on the vehicle body frame 10 through a pivot 14 and a rear wheel WR driven by the power unit 15 is provided on the rear end of the power unit 15. A cushion unit 16 is provided between the rear side of the power unit 15 and the vehicle body frame 10. A seat 17 on which a driver and a fellow passenger are sit is provided on the rear side of the steering handle 13.

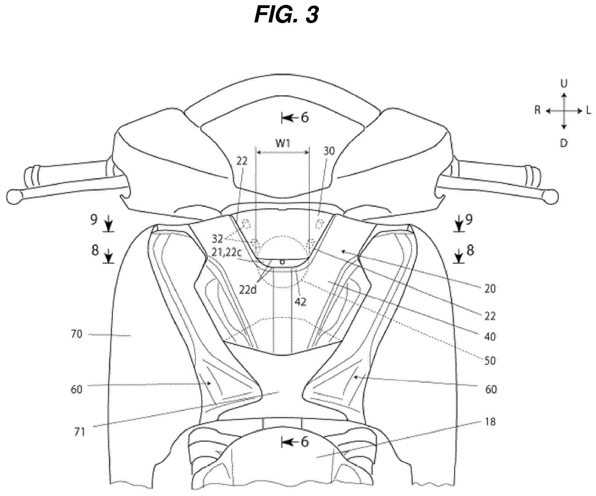

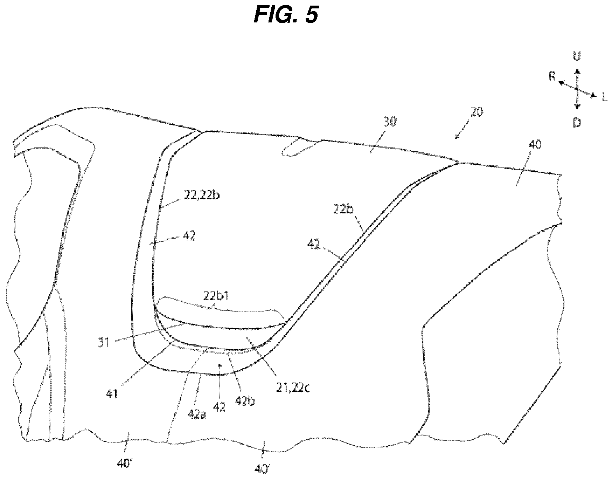

As shown in Figs. 3 and 5, the front cowl 20 is configured by combining a plurality of divided cowls 30 and 40 (two divided cowls are shown herein) and a gap 22c serves as the opening 21 for the horn by proving the gap 22c in a combined portion 22 at which the divided cowls 30 and 40 are combined together.

According to the above saddled vehicle, since the opening 21 for the horn is formed by providing the gap 22c at the combined portion 22 at which the divided cowls 30 and 40 are combined together, overlapping the opening 21 for the horn with a divisional line (22) of the front cowl 20 allows the opening 21 for the horn to be made inconspicuous. Further, the provision of the gap 22c eliminates the necessity to directly make a hole in the front cowl 20, thereby suppressing the reduction of the rigidity of the front cowl 20.

As shown in Fig. 5, the combined portion 22 includes a joined part 22b at which the divided cowls 30 and 40 are joined together and a non-joined part (22c) forming the opening 21 for the horn. The non-joined part (22c) is formed on a midway part 22b1 of the joined part 22b.

The arrangement thus configured as above, allows the divided cowls 30 and 40 to come to be joined together (22b, 22b) so as to interpose the opening 21 for the horn therebetween as a result of that the opening 21 for the horn is formed on the midway part 22b1 of the joined part 22b, thereby sufficiently securing the rigidity of the front cowl 20.

As shown in Figs. 5 to 7, the divided cowls includes at least the first divided cowl 30 and the second divided cowl 40. A first opening forming part 31 for the horn formed in the first divided cowl 30 and a second opening forming part 41 for the horn formed in the second divided cowl 40 configured in at least a part of the opening 21 for the horn. A bend portion 42 which bends backward is formed on at least one of the first opening forming part 31 for the horn and the second opening forming part 41 for the horn.

The arrangement thus configured as above allows the rigidity of the front cowl 20 around the opening 21 for the horn to be enhanced by the bend portion 40 which bends backward. Further, this bend portion 42 bends backward or bends such that the bend portion 40 comes closer to the horn 50, so that the bend portion 42 can serve as a guide for an alarm sound. Thus, the arrangement improves the transmission efficiency of the forward alarm sound emitted from the horn 50.

In the present embodiment shown herein, the front cowl 20 is divided into the upper and lower two divided cowls 30 and 40. Alternatively, as shown in Fig. 5 by a phantom line, for instance, the under front cowl 40 that is one of the divided cowls may be divided further into right and left divided cowls 40' and 40' in order for the number of division of the front cowl 20 to be three. Instead, it may also be feasible to increase the number of division of the front cowl 20.

Further, in the present embodiment shown herein, the bend portion 42 is formed on the second opening forming part 41 for the horn. Alternatively, the bend portion 42 may be formed on the first opening forming part 31 for the horn or be formed on both opening forming parts. In other words, the bend portion may be formed on all the opening forming parts for the horn or be formed on only either one of them.

The bend portion mentioned herein also includes a curved portion (a curved shape).

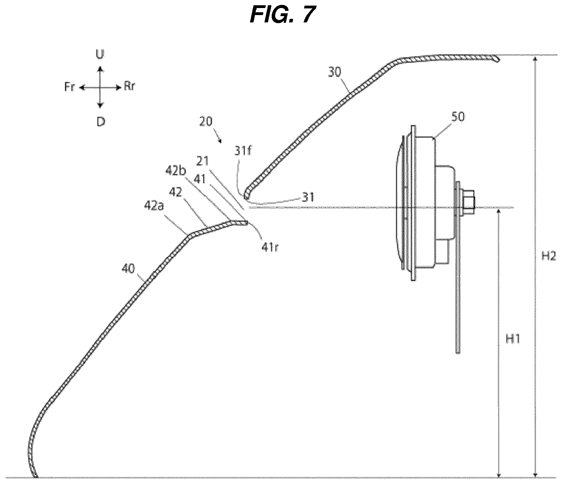

As shown in Figs. 5 and 7, in the present embodiment, the bend portion 42 is provided on the second divided cowl 40 or is composed of a first bend part 42a and a second bend part 42b at least in the second opening forming part 41 for the horn. The bend portion 42 is provided with the first bend part 42a which bends backward and the second bend part 42b which is consecutively connected to the first bend part 42a and bends backward at a more steep angle than the first bend part 42a. The arrangement thus configured as above enables the transmission efficiency of the alarm sound emitted from the horn 50 to be more improved as well as makes the field of view toward the inner side of the vehicle through the opening 21 for the horn to be narrowed when viewed from the obliquely upper side of the vehicle, which enhances the visual appearance of the vehicle. Further, as shown in Fig. 7, a rear end 41r of the second opening forming part 41 for the horn is configured such that the rear end 41f is positioned at the rear side than a front end 31f of the first opening forming part 31 for the horn, so that the second opening part 41 has a configuration that raindrops entering from the above is difficult to intrude into the inside of the front cowl 20 from the opening 21 for the horn.

As mentioned above (see Fig. 5), although the combined portion 22 is provided with the joined part 22b with which the divided cowls 30 and 40 are joined together and the non-joined part (22c) forming the opening 21 for the horn, the bend portion 42 is not only formed on the non-joined part (22c), but also formed continuously from the non-joined part (22c) to the joined part 22b.

The arrangement thus configured as above, the rigidity of the front cowl 20 around the opening 21 for the horn to be more enhanced. Further, continuously forming the bend portion 42 on the joined part 22b as well allows the opening 21 for the horn to be made more inconspicuous, thereby enhancing the visual appearance of the vehicle.

As shown in Fig. 7, the opening 21 for the horn is formed at a position nearer to the upper portion of the front cowl 20 with respect to the vertical direction of the front cowl 20 positioned above the upper end of the front fender 18 (see Fig. 1) when viewed from the side of the vehicle.

With the arrangement thus configured as above, since the opening 21 for the horn is formed nearer to the upper portion of the front cowl 20, the arrangement allows the transmission efficiency of the forward alarm sound emitted from the horn to be more improved.

Specifically, as shown in Fig. 7, in the vertical direction of the front cowl 20, when the height of the front cowl 20 which is higher than the upper end of the front fender 18 is defined as H2 and the height from the lower end of the front cowl 20 which is positioned higher than the upper end of the front fender 18 to the center of the opening 21 for the horn is taken as H1, the opening 21 for the horn is formed so as to satisfy the relation of (H2)/2 < H1.

Note that the vertical height of the lower end of H1 and H2 respectively coincides with the vertical height of the upper end of the front fender 18.

As shown in Fig. 3, the combined portion 22 is formed so as to have a U-shaped divisional line or a V-shaped divisional line (22) when viewed from the front of the vehicle. The opening 21 for the horn is formed so as to include an apex 22d (in Fig. 3, a portion corresponding to the center in the vehicle width direction of the U-shaped divisional line or the V-shaped divisional line) of the U-shaped divisional line or the V-shaped divisional line (22).

With the arrangement thus configured as above, since a gap 22c formed at the combined portion 22 forming the opening 21 for the horn includes the apex 22d of the U-shaped divisional line or the V-shaped divisional line (22) when viewed from the front of the vehicle, the arrangement allows the opening 21 for the horn to be made more inconspicuous. Further, since the opening 21 for the horn is formed so as to include the apex 22d of the U-shaped divisional line or the V-shaped divisional line (22), the arrangement also enables the rigidity of the front cowl 20 around the opening 21 for the horn to be enhanced.

Note that in the present embodiment shown herein, the apex 22d is a valley portion of the divisional line (22). In case where the U-shaped divisional line or the V-shaped divisional line (22) is turned upside down, the apex 22d is the ridge portion of the divisional line (22).

As shown in Figs. 3 and 4 as well as Figs. 8 and 9, a lighting system 60 is mounted on the right and left sides of the front cowl 20 respectively; and the lighting system 60 is mounted on the right and left sides of the horn 50 respectively.

With the arrangement thus configured as above, since the lighting systems 60 enable a part of the alarm sound to be guided to the opening 21 for the horn, the arrangement allows the transmission efficiency of the forward alarm sound emitted from the horn 50 to be improved.

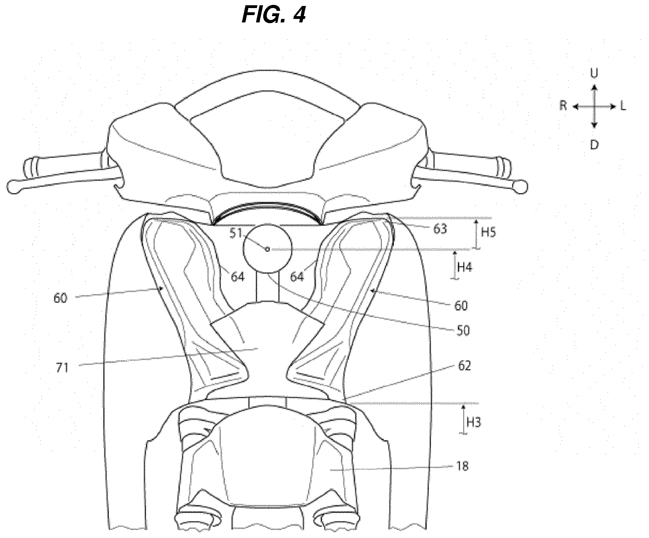

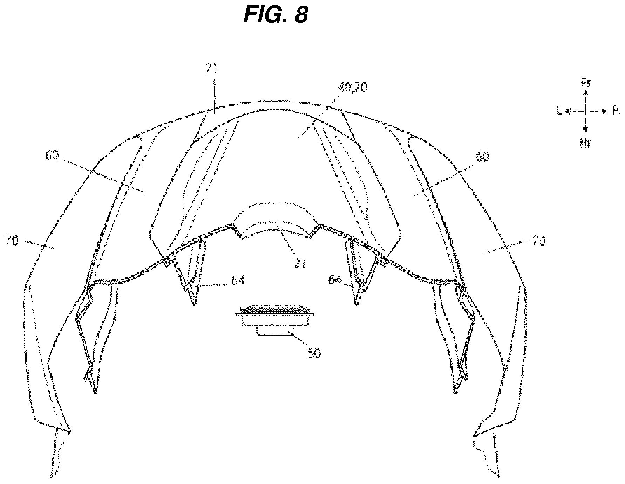

Specifically, as shown in Figs. 4 and 8, since the side walls 64 of the lighting systems 60 at the horn 50 side serve as a guide for the alarm sound emitted from the horn 50, it results in improving the transmission efficiency of the forward alarm sound emitted from the horn 50.

Further, as a result that the lighting system 60 is mounted on the right and left sides of the front cowl 20 respectively; and the lighting system 60 is mounted on the right and left sides of the horn 50 respectively, the arrangement allows compactification of the front side of the vehicle in the longitudinal direction compactification.

The lighting systems 60 may be such systems as including at least one of a blinker, a position lamp and a headlight.

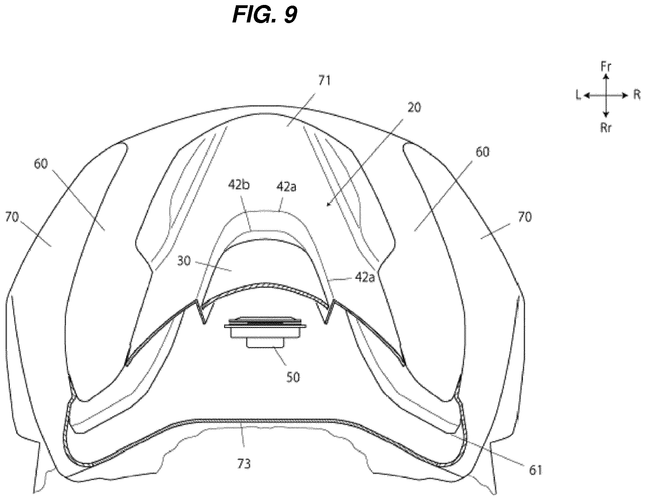

As shown in Fig. 9, the horn 50 is mounted ahead of a rear end 61 of the lighting systems 60 respectively.

The arrangement thus configured as above allows the transmission efficiency of the forward alarm sound emitted from the horn 50 to be more effectively enhanced, thereby allowing compactization of the vehicle in the longitudinal direction.

As shown in Fig. 4, the horn 50 is mounted on a position where the horn 50 overlaps with the lighting systems 60 in the vertical direction of the vehicle when viewed from the front of the vehicle.

The arrangement thus configured as above allows the transmission efficiency of the forward alarm sound emitted from the horn 50 to be more effectively enhanced, thereby also allowing compactization of the front side of the vehicle in the vertical direction.

Specifically, as shown in Fig. 4, when the height of the lower end 62 of the lighting systems 60 is defined as H3; the height of an upper end 63 of the lighting systems 60 is defined as H5; and the height of the horn 50 to its center 51 is defined as H4 respectively, taking road surface (not shown) as a reference with respect to the vertical direction of the vehicle, the horn 50 is mounted so as to satisfy the relation of H3 < H4 < H5.

As shown in Fig. 3, it is arranged such that the width W1 of the opening 21 for the horn is substantially the same as the maximum width of the horn 50.

The arrangement thus configured as above allows the transmission efficiency of the forward alarm sound emitted from the horn 50 to be enhanced.

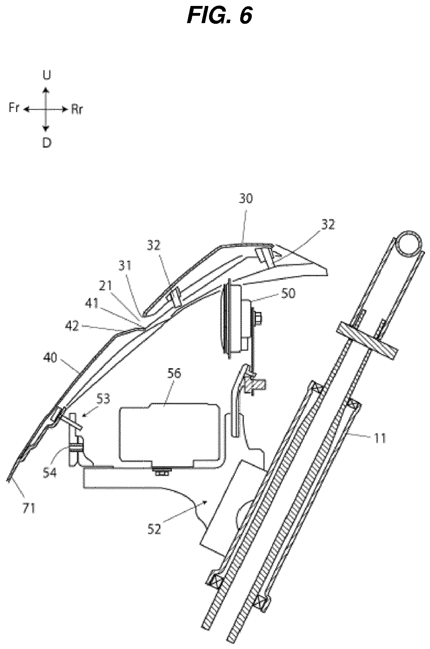

The divided cowls 30 and 40 constituting the front cowl 20 can be joined together by an appropriate means. In the present embodiment, as shown in Figs. 3 and 6, the front cowl 20 is configured by fixedly fastening the other divided cowl 40 with a screw from its backside to fastening portions 32 provided four in total on the back surface of the one divided cowl 30 in all directions.

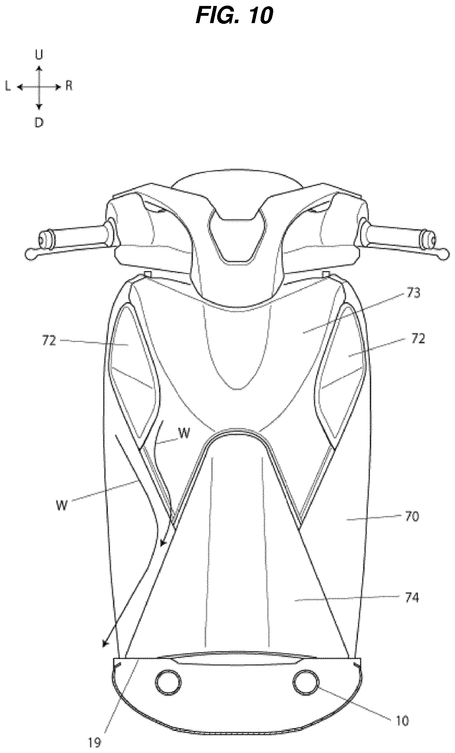

Although any attachment structure of the front cowl 20 to the vehicle body frame is available, in the present embodiment, the divided cowls 30 and 40 are previously divided into a small group; and the small divided cowls 30 and 40 are fixedly supported to the right and left lighting systems 60 and an upper leg shield 73 (see Figs. 2 and 10).

The lighting systems 60 are supported to the head pipe 11 by attaching the lighting systems 60 to attachment portions 54 to be described below. Further, the upper leg shield 73 is supported at a prescribed portion (not shown) of the vehicle body frame 10.

In Figs. 1, 2 and 10, reference numerals 70, 71, 72, 73 and 74 denote a front side cover, a garnish, a lid for container box or for maintenance, the above-mentioned upper leg shield and a lower leg shield bulged in a shevron shape respectively. A step floor 19 which extends rearward up to the lower side of the seat 17 is provided on the lower end of the lower leg shield 74.

Since the lower leg shield 74 bulges upward and rearward in the shevron shape, as shown in Fig. 10 by an arrow W, the raindrops entering from above are externally guided in to the vehicle width direction.

As shown in Fig. 6, the horn 50 is attached to a stay 52 provided on the head pipe 11.

The stay 52 is provided with an attachment portion 53 for the garnish 71 and the attachment portions 54 for the lighting systems 60.

The reference numeral 56 denotes an ABS modulator attached to the stay 52.

As described above, the embodiment of the present invention is described.

### REFERENCE SIGNS LIST

WF: front wheel
1: saddled vehicle
11: head pipe
18: front fender
20: front cowl
21: opening for horn
22: combined portion (divisional line)
22b: joined part
22b1: midway part
22c: gap (non-joined part)
22d: apex
30, 40: divided cowl
31: first opening forming part for horn
41: second opening forming part for horn
42: bend portion
50: horn
60: lighting system
61: rear end

## Claims

1. A saddled vehicle comprising a front cowl (20) covering a head pipe (11) from the front and a horn (50) at least a part of which is covered by the front cowl (20) when viewed from the front of the vehicle, an opening (21) for the horn being formed in the front cowl (20), wherein the horn (50) is attached to a stay (52) provided on the head pipe (11);
wherein the front cowl (20) is configured by combining upper and lower twoof divided cowls (30, 40);
wherein an ABS modulator (56) is attached to the stay (52) such that it lies below the horn (50) as well as protrudes further forward than the horn (50), and the stay (52) is provided with an attachment portion (53) for a garnish (71) supporting a lower portion of the lower cowl (40) and with attachment portions (54) for lighting systems (60) mounted on right and left sides of the front cowl (20) and of the horn (50),
**characterized in that** the opening (21) for the horn (50) is formed with a gap (22c) provided at a combined portion (22) where the divided cowls (30, 40) are combined together, and
the horn (50) is mounted ahead of rear ends of the lighting systems (60).

2. The saddled vehicle according to claim 1, wherein the combined portion (22) includes a joined part (22b) at which the divided cowls (30, 40) are jointed together;
a non-joined part (22c) forming the opening (21) for the horn; and
the non-joined part (22c) is formed at a midway part (22b1) of the joined part (22b).

3. The saddled vehicle according to claim 1, wherein
at least a part of the opening (21) for the horn is formed with a first opening forming part (31) for the horn formed in the upper divided cowl (30) and a second opening forming part (41) for the horn formed in the lower divided cowl (40); and
a bend portion (42) which bends backward is formed on at least one of the first opening forming part (31) for the horn and the second opening forming part (41) for the horn.

4. The saddled vehicle according to claim 3, wherein the combined portion (22) includes a joined part (22b) at which the divided cowls (30, 40) are jointed together;
a non-joined part (22c) forming the opening (21) for the horn; and
the bend portion (42) is formed consecutively from the non-joined part (22c) to the joined part (22b).

5. The saddled vehicle according to claim 1, wherein the saddled vehicle is provided with a front fender (18) covering the upper side of a front wheel (WF); and
the opening (21) for the horn is formed at a position nearer to an upper portion of the front cowl (20) with respect to the vertical direction of the front cowl (20) positioned above the upper end of the front fender (18) when viewed from the side of the vehicle.

6. The saddled vehicle according to claim 1, wherein the combined portion (22) is formed so as to have a U-shaped divisional line or a V-shaped divisional line (22) when viewed from the front of the vehicle; and
the opening (21) for the horn is formed so as to include an apex (22d) of the U-shaped divisional line or the V-shaped divisional line (22).

7. The saddled vehicle according to claim 1, wherein the horn (50) is mounted at a position where the horn (50) overlaps with the lighting systems (60) in the vertical direction when viewed from the front of the vehicle.

## Patentansprüche

1. Sattelfahrzeug, das eine Frontverkleidung (20), die ein Kopfrohr (11) von vorne her abdeckt, sowie eine Hupe (50), von der, bei Betrachtung von der Front des Fahrzeugs, zumindest ein Teil von der Frontverkleidung (20) abgedeckt ist, aufweist, wobei eine Öffnung (21) für die Hupe in der Frontverkleidung (20) ausgebildet ist, wobei die Hupe (50) an einer an dem Kopfrohr (11) vorgesehenen Strebe (52) angebracht ist,
wobei die Frontverkleidung (20) durch Kombination zweier oberer und unterer Teilverkleidungen (30, 40) konfiguriert ist;
wobei ein ABS Modulator (56) an der Strebe (52) derart angebracht ist, dass er unter der Hupe (50) liegt und auch weiter nach vorne vorsteht als die Hupe (50), und
die Strebe (52) mit einem Befestigungsabschnitt (53) für einen einen unteren Abschnitt der unteren Verkleidung (40) tragenden Beschlag (71) und mit Befestigungsabschnitten (54) für an rechten und linken Seiten der Frontverkleidung (20) und der Hupe (50) angebrachte Beleuchtungssysteme (60) versehen ist, **dadurch gekennzeichnet, dass** die Öffnung (21) für die Hupe (50) mit einer Lücke (22c) ausgebildet ist, die an einem kombinierten Abschnitt (22) vorgesehen ist, wo die Teilverkleidungen (30, 40) miteinander kombiniert sind, und
die Hupe (50) vor hinteren Enden der Beleuchtungssysteme (60) angebracht ist.

2. Das Sattelfahrzeug nach Anspruch 1, wobei der kombinierte Abschnitt (22) ein verbundenes Teil (22b) enthält, an dem die Teilverkleidungen (30, 40) miteinander verbunden sind;
wobei ein nicht verbundendes Teil (22c) die Öffnung (21) für die Hupe bildet; und das nicht verbundene Teil (22c) an einem mittleren Teil (22b1) des verbundenen Teils (22b) ausgebildet ist.

3. Das Sattelfahrzeug nach Anspruch 1, wobei
zumindest ein Teil der Öffnung (21) für die Hupe mit einem in der oberen Teilverkleidung (30) ausgebildeten ersten Öffnungs-bildenden Teil (31) für die Hupe und einem in der unteren Teilverkleidung (40) ausgebildeten zweiten Öffnungs-bildenden Teil (41) für die Hupe ausgebildet ist; und
ein gebogener Abschnitt (42), der nach hinten gebogen ist, an zumindest einem des des ersten Öffnungs-bildenden Teils (31) für die Hupe und des zweiten Öffnungs-bildenden Teils (41) für die Hupe ausgebildet ist.

4. Das Sattelfahrzeug nach Anspruch 3, wobei der kombinierte Abschnitt (22) ein verbundenes Teil (22b) enthält, an dem die Teilverkleidungen (30, 40) miteinander verbunden sind;
wobei ein nicht verbundenes Teil (22c) die Öffnung (21) für das Horn bildet;
wobei der gebogene Abschnitt (42) aufeinanderfolgend von dem nicht verbundenen Teil (22c) zu dem verbundenen Teil (22b) ausgebildet ist.

5. Das Sattelfahrzeug nach Anspruch 1, wobei das Sattelfahrzeug mit einem vorderen Fender (18) versehen ist, der die obere Seite eines Vorderrads (WF) abdeckt; und die Öffnung (21) für die Hupe an einer Position ausgebildet ist, die in Bezug auf die vertikale Richtung der Frontverkleidung (20) einem oberen Abschnitt der Frontverkleidung (20) näher ist, der, bei Betrachtung von der Seite des Fahrzeugs über dem oberen Ende des vorderen Fenders (18) positioniert ist.

6. Das Sattelfahrzeug nach Anspruch 1, wobei der kombinierte Abschnitt (22) so ausgebildet ist, dass er, bei Betrachtung von der Front des Fahrzeugs, eine U-förmige Trennlinie oder V-förmige Trennlinie (22) aufweist; und
die Öffnung (21) für die Hupe so ausgebildet ist, dass sie einen Scheitel (22d) der U-förmigen Trennlinie oder der V-förmigen Trennlinie (22) enthält.

7. Das Sattelfahrzeug nach Anspruch 1, wobei die Hupe (50) an einer Position angebracht ist, wo die Hupe (50), bei Betrachtung von der Front des Fahrzeugs, mit dem Beleuchtungssystem (60) in der vertikalen Richtung überlappt.

## Revendications

1. Véhicule à selle comprenant un auvent avant (20) couvrant une colonne (11) depuis l'avant et un avertisseur sonore (50) dont au moins une partie est couverte par l'auvent avant (20), vu depuis l'avant du véhicule, une ouverture (21) pour l'avertisseur sonore étant formée dans l'auvent avant, dans lequel l'avertisseur sonore (50) est attaché à un potelet (52) prévu sur la colonne (11) ;
dans lequel l'auvent avant (20) est configuré par combinaison de deux auvents divisés supérieur et inférieur (30, 40) ;
dans lequel un modulateur ABS (56) est attaché au potelet (52) de sorte qu'il soit disposé sous l'avertisseur sonore (50) et qu'il dépasse également plus vers l'avant que l'avertisseur sonore (50), et
le potelet (52) est pourvu d'une portion d'attache (53) pour une garniture (71) supportant une portion inférieure de l'auvent inférieur (40) et de portions d'attache (54) pour des systèmes d'éclairage (60) montés sur des côtés droit et gauche de l'auvent avant (20) et de l'avertisseur sonore (50),
**caractérisé en ce que** l'ouverture (21) pour l'avertisseur sonore (50) est formée avec un écartement (22c) prévu au niveau d'une portion combinée (22) où les auvents divisés (30, 40) sont combinés ensemble, et
l'avertisseur sonore (50) est monté à l'avant d'extrémités arrières des systèmes d'éclairage (60).

2. Véhicule à selle selon la revendication 1, dans lequel la portion combinée (22) comporte une partie jointe (22b) au niveau de laquelle les auvents divisés (30, 40) sont joints ensemble ;
une partie non jointe (22c) formant l'ouverture (21) pour l'avertisseur sonore ; et
la partie non jointe (22c) est formée au niveau d'une partie médiane (22b1) de la partie jointe (22b).

3. Véhicule à selle selon la revendication 1, dans lequel
au moins une partie de l'ouverture (21) pour l'avertisseur sonore est formée avec une première partie formant ouverture (31) pour l'avertisseur sonore formée dans l'auvent divisé supérieur (30) et une deuxième partie formant ouverture (41) pour l'avertisseur sonore formée dans l'auvent divisé inférieur (40) ; et
une portion de flexion (42) qui fléchit vers le bas est formée sur au moins l'une de la première partie formant ouverture (31) pour l'avertisseur sonore et de la deuxième partie formant ouverture (41) pour l'avertisseur sonore.

4. Véhicule à selle selon la revendication 3, dans lequel la portion combinée (22) comporte une partie jointe (22b) au niveau de laquelle les auvents divisés (30, 40) sont joints ensemble ;
une partie non jointe (22c) formant l'ouverture (21) pour l'avertisseur sonore ; et
la portion de flexion (42) est formée consécutivement de la partie non jointe (22c) à la partie jointe (22b).

5. Véhicule à selle selon la revendication 1, dans lequel le véhicule à selle est pourvu d'un garde-boue avant (18) couvrant le côté supérieur d'une roue avant (WF) ; et
l'ouverture (21) pour l'avertisseur sonore est formée au niveau d'une position plus proche d'une portion supérieure de l'auvent avant (20) vis-à-vis de la direction verticale de l'auvent avant (20) positionnée au-dessus de l'extrémité supérieure du garde-boue avant (18), vue depuis le côté du véhicule.

6. Véhicule à selle selon la revendication 1, dans lequel la portion combinée (22) est formée de façon à avoir une ligne de division en forme de U ou une ligne de division en forme de V (22), vue depuis l'avant du véhicule ; et
l'ouverture (21) pour l'avertisseur sonore est formée de façon à comporter un sommet (22d) de la ligne de division en forme de U ou de la ligne de division en forme de V (22).

7. Véhicule à selle selon la revendication 1, dans lequel l'avertisseur sonore (50) est monté à une position où l'avertisseur sonore (50) est en chevauchement avec les systèmes d'éclairage (60) dans la direction verticale, vu depuis l'avant du véhicule.
